# EUROPÄISCHE PATENTSCHRIFT

(11) **EP 0 929 773 B1**
(45) Veröffentlichungstag und Bekanntmachung des Hinweises auf die Patenterteilung: **04.12.2002**
(21) Anmeldenummer: 96932480.5
(22) Anmeldetag: 07.09.1996
(51) Int. Cl.: F16N 7/32, B23Q 11/10

(54) **KÜHLSCHMIERVORRICHTUNG**
LUBRICATOR
LUBRIFICATEUR

(43) Veröffentlichungstag der Anmeldung: 21.07.1999
(73) Patentinhaber: Willy Vogel AG, D-12277 Berlin (DE)
(72) Erfinder: HESSELBACH, Jens, D-73265 Dettingen (DE); WEIGELE, Rolf, CH-8266 Steckborn (CH)
(74) Vertreter: Grünecker, Kinkeldey, Stockmair & Schwanhäusser Anwaltssozietät
(86) Internationale Anmeldenummer: EP9603927
(87) Internationale Veröffentlichungsnummer: WO98010217

(56) Entgegenhaltungen:
- EP-A- 0 502 823
- EP-A- 0 578 934
- WO-A-90/13735
- DE-U- 9 304 713

## Beschreibung

Die Erfindung betrifft eine Kühlschmiervorrichtung zum Aufbringen von Kühlschmiermittel auf ein Werkzeug und/oder ein Werkstück, mit zumindest einem Vorrat an flüssigem Kühlschmiermittel und zumindest einem Vorrat an Kühlschmiermittel-Aerosol, wobei das Aerosol durch Zerstäuben des flüssigen Kühlschmiermittels in einer Kammer gebildet ist, und mit einer Steuervorrichtung zur Auswahl des einer Düse zugeführten Kühlschmier-Mediums.

Sowohl Werkzeuge als auch Werkstücke unterliegen beispielsweise bei deren spannender Bearbeitung hohen Reibungskräften, wodurch eine starke Wärmeentwicklung bedingt ist. Es ist deshalb üblich, die Reibung der genannten Teile durch Aufbringen eines Kühlschmiermittels, insbesondere eines Schneidöls oder einer Emulsion, herabzusetzen, wodurch gleichzeitig die Teile gekühlt werden. Darüber hinaus können bei der Bearbeitung anfallende Späne mit dem Kühlschmiermittel weggespült werden.

Teilweise wird noch heute die seit langem bekannte Vollstrahlkühlung angewendet, bei der das Kühlschmiermittel in relativ großer Menge in einem Flüssigkeitsvollstrahl auf die zu kühlenden Flächen aufgebracht wird. Mit diesem Vorgehen sind jedoch mehrere Nachteile verbunden. Einerseits ergibt sich ein sehr hoher Verbrauch an Kühlschmiermittel, wodurch der Betrieb der Kühlschmiervorrichtung teuer ist. Darüber hinaus ist es aus ökologischen Gründen notwendig, das benutzte Kühlschmiermittel umweltverträglich zu entsorgen, was aufwendig und ebenfalls teuer ist.

Zur Vermeidung der mit der Vollstrahlkühlung verbundenen Nachteile ist in den letzten Jahren die sogenannte Minimalschmiertechnik entwickelt worden, bei der beispielsweise ein flüssiges Kühlschmiermittel in einer Düse in einem Luftstrom vernebelt wird. Zu diesem Zweck wird der Düse das flüssige Kühlschmiermittel und die Luft in getrennten Leitungen zugeführt, wobei der aus der Düse mit relativ hoher Geschwindigkeit austretende Luftstrom sich mit dem Kühlschmiermittel nach Austritt aus der Düse vermischt. Es sind auch Systeme bekannt, bei denen die Erzeugung des Gemischnebels innerhalb der Düse erfolgt. Der Sprühnebel des Kühlschmiermittel-Luft-Gemisches wird direkt auf die zu behandelnden Flächen aufgebracht, wodurch sich eine gute Kühl- und Schmierwirkung an den Werkzeugen und Werkstücken erzielen läßt. Des weiteren ergibt sich der Vorteil, daß der Verbrauch an Kühlschmiermittel wesentlich verringert und damit auch das Problem der Entsorgung gemindert ist.

Es hat sich jedoch gezeigt, daß der in genannter Weise erzeugte Kühlschmiermittel-Nebel relativ inhomogen hinsichtlich der Tröpfchengröße ist. Dies ist zwar bei der sogenannten Außenkühlung, bei der das Kühlschmiermittel von außen auf die zu kühlenden Teile aufgebracht wird, relativ unproblematisch, jedoch treten Probleme bei der sogenannten Innenkühlung auf, bei der der Kühlschmiermittel-Nebel durch im Werkzeug verlaufende, innere Kanäle bis direkt in die Kontaktfläche zwischen Werkzeug und Werkstück gefördert wird. Größere Tröpfchen des Kühlschmiermittel-Nebels werden infolge der Drehung des Werkzeugs ebenfalls in Drehung versetzt und radial nach außen beschleunigt, so daß sie sich an der Wandung der Kanäle niederschlagen. Dies führt zu einer ungleichmäßigen Förderung des Kühlschmiermittels und insbesondere zu Spritzerbildung. Gleichartige Probleme treten auf, wenn der Kühlschmiermittel-Nebel durch relativ lange Rohr- oder Schlauchleitungen gefördert werden soll.

Aus der DE 30 34 941 A1, von der im Oberbegriff des Anspruchs 1 ausgegangen wird, ist es bekannt, zur Kühlung und Schmierung von drehenden Teilen neben einer herkömmlichen Ölschmierung alternativ ein Aerosol zu verwenden. Bei Normalbetrieb wird einem Lager Öl zugeführt, das aus einem in einer Kammer befindlichen Vorrat entnommen wird. Bei Ausfall des Haupt-Schmierölkreises kann ein Benutzer ein Steuerventil öffnen, wodurch der Kammer Luft zugeführt wird, so daß sich dort ein Aerosol bildet, das dem Lager zugeführt werden kann und das sehr feine im Luftstrom schwebende Ölpartikel enthält, wobei die schweren Ölpartikel, die sich am Boden oder der Wand des Aerosol-Gehäuses absetzen, in den Vorrat zurückfließen. Es verbleibt im Aerosol-Gehäuse ein Aerosol, das sich sehr gut in Schlauchleitungen und inneren Kanälen von Werkzeugen fördern läßt. Jedoch läßt sich die Zusammensetzung des Aerosols gemäß der DE 30 34 941 A1 kaum verändern und auch eine Anpassung des Kühlungs- bzw. Schmierungsverfahrens sowie dessen Parameter an die jeweiligen Anforderungen, die je nach Werkstoff- und Bearbeitungsart verschieden sind, ist nicht möglich.

Der Erfindung liegt die Aufgabe zugrunde, eine Kühlschmiervorrichtung der genannten Art zu schaffen, die eine gute Anpassung an unterschiedliche Schmierungs- und Kühlungserfordernisse ermöglicht.

Diese Aufgabe wird erfindungsgemäß bei einer Kühlschmiervorrichtung dadurch gelöst, daß das Aerosol, das flüssige Kühlschmiermittel und ein Gas, insbesondere Luft, unabhängig voneinander der Steuervorrichtung zugeführt sind und daß diese Medien der Düse in Abhängigkeit von der Stellung der Steuervorrichtung einzeln oder in beliebiger Kombination über eine Leitungsanordnung zuführbar sind.

Bei der erfindungsgemäßen Kühlschmiervorrichtung stehen dem Benutzer verschiedene Medien gleichzeitig zur Verfügung. Zum einen ist zumindest ein Vorrat an flüssigem Kühlschmiermittel vorhanden, bei dem es sich um Öle verschiedener Viskosität, geeignete Emulsionen oder gegebenenfalls auch um Wasser handeln kann. Darüber hinaus ist auch zumindest ein Vorrat an einem Aerosol vorhanden, das in genannter Weise durch Vernebelung von flüssigem Kühlschmiermittel in einem Luftstrom unter Abscheidung größerer Tröpfchen erzeugt ist. Des weiteren stehen in der erfindungsgemäßen Kühlschmiervorrichtung ein oder mehrere verschiedene Gase zur Verfügung, wobei es sich um CO₂, N₂ oder auch insbesondere Luft handeln kann. Der Benutzer kann diese Medien einzeln oder in gewünschter Kombination einer Düse zuführen, in oder vor der die Medien vermischt und als Sprühstrahl auf die zu kühlenden und schmierenden Werkzeuge bzw. Werkstücke aufgebracht werden. Auf diese Weise ist es möglich, die Schmierungs- und Kühlungseigenschaften an die durch die zu bearbeitenden Werkstoffe und die Bearbeitungsart bestimmten Rahmenbedingungen anzupassen. Eine zusätzliche Kühlwirkung kann erreicht werden, indem eine kalte Flüssigkeit oder ein kaltes Gas dem Kühlmittelstrom beigemischt wird oder sich Gase oder Flüssigkeiten durch Expansion vor der Düse abkühlen. Entsprechend der Wahl oder des Mischungsverhältnisses verschiedener Gase, Flüssigkeiten, Emulsionen oder Öle kann ein Kühleffekt durch Konvektion oder durch Ausnutzen der Verdampfungsenthalpie erreicht werden.

Es hat sich als üblicherweise sinnvoll erwiesen, die zur Düse führende Leitungsanordnung aus mehreren, zumindest zwei unabhängigen Leitungen aufzubauen. Bei Verwendung von zwei Leitungen sollte eine erste Leitung in einer Mittelbohrung der Düse und eine zweite Leitung in einem die Mittelbohrung umgebenden Ringspalt münden. Derartige Düsen sind bekannt und weisen den Vorteil auf, daß durch den Ringspalt ein zumindest annähernd gasförmiges Medium (Aerosol oder Luft) ausströmen kann, das den zentralen Sprühstrahl mantelartig umgibt und zusammenhält. Alternativ kann auch eine an sich bekannte Dreistoffdüse verwendet werden.

In einer bevorzugten Ausgestaltung der Erfindung ist vorgesehen, daß das flüssige Kühlschmiermittel oder das Aerosol in der ersten Leitung der Düse zuführbar ist, die in der Mittelbohrung der Düse mündet. Entsprechend sollten in der zweiten Leitung-oder den weiteren Leitungen wahlweise das Aerosol oder die weiteren Gase der Düse zuführbar sein. Auf diese Weise lassen sich bei der Kühlschmiervorrichtung verschiedene Sprühstrahlzusammensetzungen erzielen, die für unterschiedliche Bearbeitungsaufgaben sinnvoll einsetzbar sind.

Einerseits kann in der inneren ersten Leitung das flüssige Kühlschmiermittel gefördert werden, während in der zweiten Leitung Luft gefördert wird. Dies ergibt nach Austritt aus der Düse einen gerichteten Sprühstrahl mit relativ großen Schmiermitteltröpfchen bei geringer Schmiermittelmenge, was für die Außenschmierung von Zerspanwerkzeugen vorteilhaft ist.

Wenn statt der Luft in der zweiten Leitung Aerosol gefördert wird, ergibt sich nach Austritt aus der Düse ein feiner Aerosolnebel, dem aus der Mittelöffnung relativ große Schmiermittelpartikel zugegeben werden. Ein derartiger Kühlstrahl ist beispielsweise bei der Hochleistungszerspanung sowie für Sonderaufgaben einsetzbar, bei denen eine große Kühlschmiermittelmenge erforderlich ist.

Wenn die innere erste Leitung abgesperrt wird und über die zweite Leitung der Düse Aerosol zugeführt wird, ergibt sich am Austritt der Düse ein sehr feiner Aerosolsprühstrahl. Durch Umschalten der Steuervorrichtung kann wahlweise auch mittig Aerosol mit einem umgebenden Luftmantelstrahl gefördert werden.

Als weitere Möglichkeit ergibt sich bei der erfindungsgemäßen Kühlschmiervorrichtung, daß durch die zweite Leitung Luft gefördert wird, während die innere erste Leitung abgesperrt ist. Die an der Düse austretende reine Luftströmung kann zum Wegblasen von Spänen oder anderen Verunreinigungen sowie zum Reinigen von Werkzeugen verwendet werden.

Bei allen genannten Alternativen kann bei der Herstellung des Aerosols dessen Fettigkeit, d.h. der Anteil des flüssigen Kühlschmiermittels in der Luft vorzugsweise eingestellt und stufenlos variiert werden, indem die für die Zerstäubung des Kühlschmiermittels angesaugte Kühlschmiermittelmenge mit Hilfe eines Ventils gesteuert wird. Der Volumenstrom des der Zerstäubung zugeführten flüssigen Kühlschmiermittels kann über ein Ventil eingestellt werden. Dadurch läßt sich der Fettigkeitsgrad des Aerosols, d.h. dessen Gehalt an Kühlschmiermittel, einstellen. Der Volumenstrom der Druckluft kann über ein Druckminderventil variiert werden. Bei Ansteigen des Drucks ist der Luftdurchsatz durch die Zerstäubereinheit erhöht. Dadurch steigt der Saugdruck in der Zerstäubereinheit, so daß der Volumenstrom des flüssigen Kühlschmiermittels in noch weiteren Grenzen variiert werden kann. Durch Variation der Gasgeschwindigkeit in der Zerstäubereinheit kann die Tröpfchengröße des erzeugten Aerosols eingestellt werden. Insbesondere der für eingeatmete Partikel gefährlich erscheinende Bereich von 0,5 µm bis 5 µm kann dadurch vermieden werden.

Um die Fördermengen der Medien in den einzelnen Leitungen zu der Düse zu variieren, kann in den zur Düse führenden Leitungen jeweils ein Ventil zur Einstellung des Volumenstroms angeordnet sein.

Es sei angemerkt, daß statt einer Düse selbstverständlich auch mehrere Düsen parallel geschaltet sein können. Darüber hinaus können mehrere Steuervorrichtungen parallel geschaltet und unabhängig voneinander betreibbar sein.

Um die genannten Medienströme in den einzelnen Leitungen zu erzielen, müssen an entsprechenden Steuerventilen die notwendigen Einstellungen vorgenommen werden. Diese Einstellung kann automatisiert bzw. durch eine elektronische Steuerung vorgenommen werden. Dadurch kann auch eine Integration in die Werkzeugmaschinensteuerung und eventuell in die automatische Programmierung in der Arbeitsvorbereitung realisiert werden. Dabei sollte die Steuervorrichtung für jede Leitung ein Steuerventil aufweisen. Durch entsprechende Einstellungen der Steuerventile können die oben genannten Betriebszustände erreicht werden.

In Weiterbildung der Erfindung kann vorgesehen sein, das Kühlschmiermittel, das sich am Werkzeug oder dem Werkstück abgesetzt hat, abzusaugen und einer nochmaligen Benutzung zuzuführen.

Die Aufbringung des Kühlschmiermittels mit Hilfe der Düse entspricht der eingangs genannten Außenkühlung. Zur Erzielung der Innenkühlung kann an dem den Vorrat an Aerosol aufnehmenden Behälter, der vorzugsweise auch den Vorrat an flüssigem Kühlschmiermittel aufnimmt, zumindest eine zusätzliche Anschlußleitung zur Entnahme von Aerosol vorgesehen sein. Die Förderung des Aerosols durch diese zusätzliche Anschlußleitung kann entweder dadurch erfolgen, daß der Behälter unter einen Innendruck gesetzt wird, vorzugsweise ist jedoch an oder in der zusätzlichen Anschlußleitung eine Saugvorrichtung angeordnet, die beispielsweise von einer mit Luft betriebenen Beschleunigungseinheit gebildet sein kann. An die zusätzliche Anschlußleitung für Innenkühlung kann ebenfalls eine Steuervorrichtung des vorgenannten Aufbau angeschlossen sein.

In dem Behälter können durch Trennwände verschiedene Kammern für flüssige Kühlschmiermittel und entsprechende Aerosole und/oder für Gase gebildet sein.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: eine teilweise geschnitten dargestellte perspektivische Ansicht des Behälters der Kühlschmiervorrichtung,
- Figur 2: eine ausschnittsweise Ansicht einer Weiterbildung des Behälters und
- Figur 3: eine alternative Ausgestaltung der Leitungen.

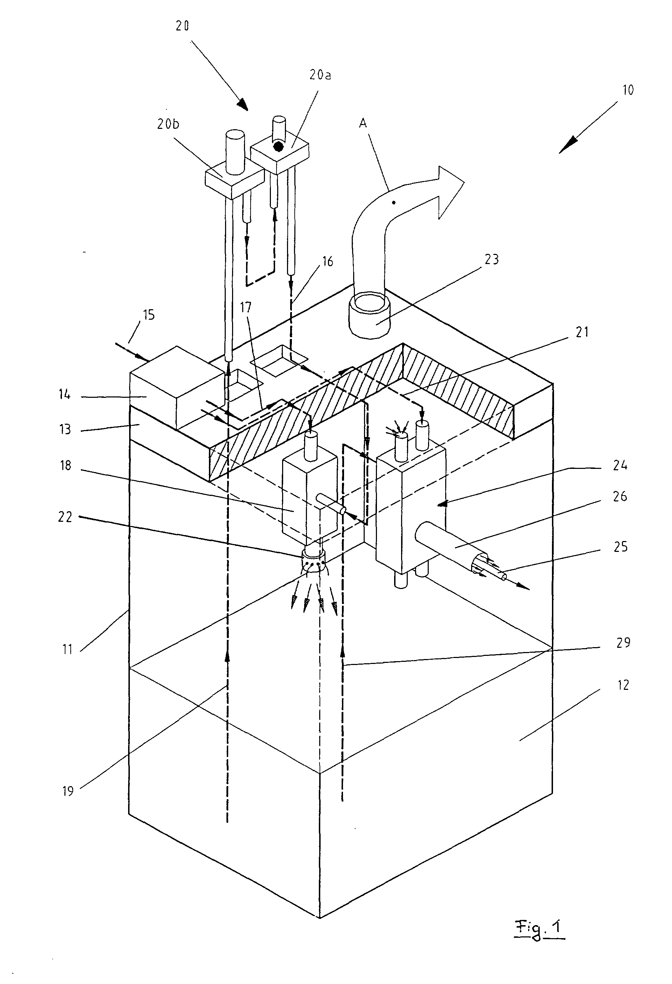

Gemäß Figur 1 weist die Kühlschmiervorrichtung 10 einen Behälter 11 auf, der in seinem unteren Bereich einen Vorrat 12 an flüssigem Kühlschmiermittel, beispielsweise Öl, enthält. Der Behälter ist durch einen Deckel 13 verschlossen und als Druckbehälter ausgebildet. In dem oberhalb des Ölvorrats 12 gebildeten Raum des Behälters 11 befindet sich ein Aerosol, das in bekannter Weise dadurch gebildet wird, daß ein Druckluftstrom über eine Leitung 15, ein Druckminderventil 14 und eine weiterführende Leitung 17 einer Injektorvorrichtung 18 zugeführt wird. Aufgrund des durch die Injektorvorrichtung 18 strömenden Luftstroms entsteht ein Unterdruck, mittels dessen Öl über eine Saugleitung 19, eine Einstellvorrichtung 20, die ein Steuerventil 20b und eine Abschaltvorrichtung 20a zur Schnellabschaltung umfaßt, und eine weiterführende Leitung 16 aus dem Vorrat 12 in die Injektorvorrichtung 18 eingesaugt wird. Mit Hilfe der Einstellvorrichtung 20 läßt sich der Volumenstrom des Öls in der Saugleitung 19 stufenlos steuern, so daß der Ölgehalt in dem Aerosol, d.h. die sogenannte Fettigkeit des Aerosols, verändert werden kann. Das in der Injektordüse 18 gebildete Öl-Luft-Gemisch wird über eine Düse 22 in dem Behälter 11 zerstäubt, wobei die schwereren Partikel in den Ölvorrat 12 zurückfließen.

In dem Behälter 11 ist eine Steuervorrichtung 24 angeordnet, mittels der zu einer nicht dargestellten Sprühdüse führende Medienströme eingestellt werden können. An der Steuervorrichtung 24 steht einerseits Druckluft an, die über die Zuführleitung 15, das Druckminderventil 14 und eine weiterführende Leitung 21 zugeführt wird. Darüber hinaus kann die Steuervorrichtung 24 Aerosol aus dem Luftraum des Behälters 11 ansaugen. Über eine Steigleitung 29 kann die Steuervorrichtung 24 des weiteren Öl aus dem Vorrat 12 entnehmen.

Wie Figur 1 zu entnehmen ist, führen zwei Leitungen von der Steuervorrichtung 24 zu der nicht dargestellten Düse. Zum einen handelt es sich um eine mittlere erste Leitung 25, die in einer Mittelöffnung der Düse mündet und in der der Düse Öl zugeführt werden kann. Die erste Leitung 25 ist konzentrisch umgeben von einer zweiten Leitung 26, in der der Düse wahlweise Aerosol oder Druckluft zugeführt werden kann. Die Steuervorrichtung 24 weist entsprechende Steuerventile, um die genannten Medien wahlweise in die genannten Leitungen einströmen zu lassen oder um die Leitungen abzusperren, sowie Regelventile zur Einstellung des jeweiligen Volumenstroms auf.

In dem Deckel 13 des Behälters 11 ist eine zusätzliche Anschlußleitung 23 vorgesehen, über die dem Behälter 11 Aerosol entnommen werden kann, um es beispielsweise zur Innenkühlung zu verwenden. Die Förderung des Aerosols durch die zusätzlichen Anschlußleitung 23 kann durch den Innendruck im Behälter 11 erfolgen.

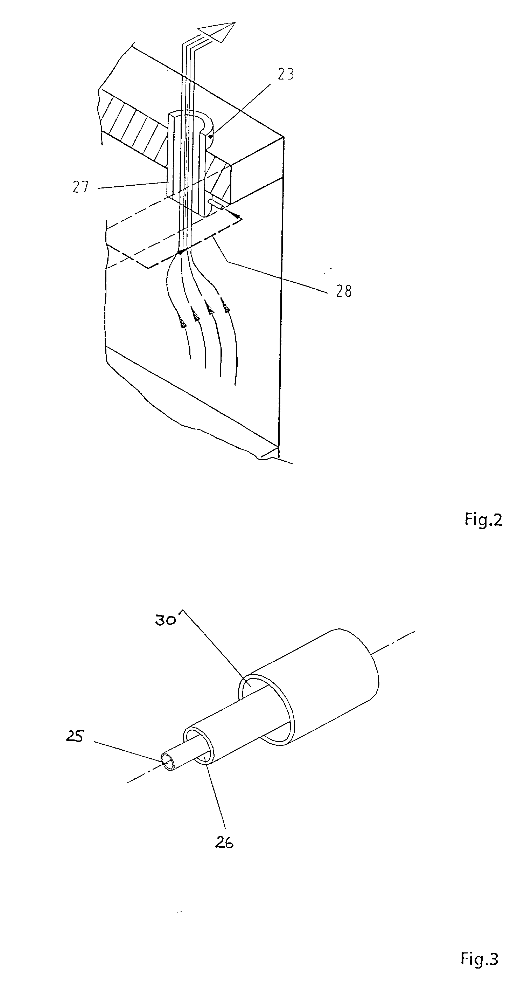

Figur 2 zeigt eine alternative Ausgestaltung zur Förderung des Aerosols durch die zusätzliche Anschlußleitung 23. Gemäß Figur 2 weist die zusätzliche Anschlußleitung 23 eine Saugdüse 27 auf, die über eine Leitung 28 mit Druckluft versorgt wird. Die Luft wird in Förderrichtung in die Saugdüse 27 eingeleitet, so daß die Luftströmung das Aerosol ansaugt, wobei die Kühlschmiermittel-Partikel nochmals verwirbelt und beschleunigt werden.

Figur 3 zeigt den Aufbau der zur Düse führenden Leitungen, wenn drei Medien unabhängig gefördert werden sollen. In einer inneren Leitung 25 wird vorzugsweise das flüssige Kühlschmiermittel befördert. Die innere Leitung 25 ist im wesentlichen koaxial von einer weiteren Leitung 26 umgeben, in der wahlweise ein Gas, beispielsweise Luft, oder ein Aerosol gefördert werden kann. Die beiden Leitungen 25 und 26 sind im wesentlichen koaxial von einer äußeren Leitung 30 umgeben, in der ebenfalls wahlweise ein Gas, Druckluft oder ein Aerosol gefördert werden können.

## Patentansprüche

1. Kühlschmiervorrichtung zum Aufbringen von Kühlschmiermittel auf ein Werkzeug und/oder ein Werkstück, mit zumindest einem Vorrat an flüssigem Kühlschmiermittel und zumindest einem Vorrat an einem Kühlschmiermittel-Aerosol, wobei das Aerosol durch Zerstäuben des flüssigen Kühlschmiermittels in einer Kammer gebildet ist, und mit einer Steuervorrichtung zur Auswahl des einer Düse zugeführten Kühlschmier-Mediums, **dadurch gekennzeichnet, daß** das Aerosol, das flüssige Kühlschmiermittel und ein Gas, insbesondere Luft, unabhängig voneinander der Steuervorrichtung (24) und der Düse in Abhängigkeit von der Stellung der Steuervorrichtung einzeln oder in beliebiger Kombination über eine Leitungsanordnung (25, 26; 25, 26, 30) zuführbar sind.

2. Kühlschmiervorrichtung nach Anspruch 1, **dadurch gekennzeichnet, daß** die Leitungsanordnung zumindest zwei unabhängige Leitungen (25, 26) umfaßt.

3. Kühlschmiervorrichtung nach Anspruch 1 oder 2, **dadurch gekennzeichnet, daß** eine erste Leitung (25) in einer Mittelbohrung der Düse und zumindest eine weitere Leitung (26) in einem die Mittelbohrung umgebenden Ringspalt mündet.

4. Kühlschmiervorrichtung nach Anspruch 3, **dadurch gekennzeichnet, daß** das flüssige Kühlschmiermittel in der ersten Leitung (25) der Düse zuführbar ist.

5. Kühlschmiervorrichtung nach Anspruch 3 oder 4, **dadurch gekennzeichnet, daß** in der weiteren Leitung (26) wahlweise das Aerosol oder ein Gas, insbesondere Luft, der Düse zuführbar ist.

6. Kühlschmiervorrichtung nach einem der Ansprüche 1 bis 5, **dadurch gekennzeichnet, daß** der Vorrat (12) an flüssigem Kühlschmiermittel und der Vorrat an Aerosol in einem gemeinsamen Behälter (11) enthalten sind.

7. Kühlschmiervorrichtung nach einem der Ansprüche 1 bis 6, **dadurch gekennzeichnet, daß** in den zur Düse führenden Leitungen (25, 26) jeweils ein Ventil zur Einstellung des Volumenstroms angeordnet ist.

8. Kühlschmiervorrichtung nach einem der Ansprüche 3 bis 7, **dadurch gekennzeichnet, daß** die Steuervorrichtung (24) ein erstes Steuerventil für die erste Leitung (25), bei dem eingangsseitig das flüssige Kühlschmiermittel ansteht, und ein weiteres Steuerventil für jede weitere Leitung (26) aufweist, bei dem eingangsseitig das Aerosol und/oder ein Gas, insbesondere Luft, anstehen.

9. Kühlschmiervorrichtung nach Anspruch 6, **dadurch gekennzeichnet, daß** der Behälter (11) zumindest eine zusätzliche Anschlußleitung (23) zur Entnahme von Aerosol aufweist.

10. Kühlschmiervorrichtung nach Anspruch 9, **dadurch gekennzeichnet, daß** der zusätzlichen Anschlußleitung (23) eine Saugvorrichtung (27) zugeordnet ist.

11. Kühlschmiervorrichtung nach Anspruch 10, **dadurch gekennzeichnet, daß** die Saugvorrichtung (27) eine mit Luft betriebene Beschleunigungseinheit ist.

## Claims

1. A cooling/lubricating device for applying cooling lubricant onto a tool and/or a workpiece, with at least one supply of liquid cooling lubricant and at least one supply of a cooling-lubricant aerosol, the aerosol being formed in a chamber by atomizing the liquid cooling lubricant, and with a control device for selection of the cooling/lubricating medium which is supplied to a nozzle, **characterised in that** the aerosol, the liquid cooling lubricant and a gas, in particular air, are capable of being supplied to the control device (24) and to the nozzle independently of one another, depending on the setting of the control device, individually or in arbitrary combination, via a line arrangement (25, 26; 25, 26, 30).

2. Cooling/lubricating device according to Claim 1, **characterised in that** the line arrangement comprises at least two independent lines (25, 26).

3. Cooling/lubricating device according to Claim 1 or 2, **characterised in that** a first line (25) leads into a central bore of the nozzle and at least one further line (26) leads into an annular gap surrounding the central bore.

4. Cooling/lubricating device according to Claim 3, **characterised in that** the liquid cooling lubricant in the first line (25) is capable of being supplied to the nozzle.

5. cooling/lubricating device according to Claim 3 or 4, **characterised in that** the aerosol or a gas, in particular air, in the further line (26) is optionally capable of being supplied to the nozzle.

6. Cooling/lubricating device according to one of Claims 1 to 5, **characterised in that** the supply (12) of liquid cooling lubricant and the supply of aerosol are contained in a common container (11).

7. Cooling/lubricating device according to one of Claims 1 to 6, **characterised in that** a valve for adjusting the volumetric flow rate is arranged in each of the lines (25, 26) leading to the nozzle.

8. Cooling/lubricating device according to one of Claims 3 to 7, **characterised in that** the control device (24) comprises a first control valve for the first line (25), at which the liquid cooling lubricant is queued on the input side, and a further control valve for each further line (26), at which the aerosol and/or a gas, in particular air, is queued on the input side.

9. Cooling/lubricating device according to Claim 6, **characterised in that** the container (11) comprises at least one additional connecting line (23) for the removal of aerosol.

10. Cooling/lubricating device according to Claim 9, **characterised in that** a suction device (27) is assigned to the additional connecting line (23).

11. Cooling/lubricating device according to Claim 10, **characterised in that** the suction device (27) is an accelerating unit operated with air.

## Revendications

1. Dispositif pour déposer un réfrigérant lubrifiant sur un outil et/ou une pièce d'oeuvre, doté au moins d'une réserve de lubrifiant liquide et d'au moins une réserve d'un aérosol lubrifiant, l'aérosol étant formé dans une chambre pour atomiser le lubrifiant liquide et doté d'un dispositif de commande pour sélectionner le milieu lubrifiant amené à une buse, **caractérisé en ce que** l'aérosol, le lubrifiant liquide et un gaz, en particulier l'air, indépendamment les uns des autres, peuvent être amenés au dispositif de commande (24) et à la buse en fonction de la position du dispositif de commande, isolément ou en n'importe quelle combinaison, par un arrangement des conduites (25, 26 ; 25, 26 ; 30).

2. Dispositif lubrificateur selon la revendication 1, **caractérisé en ce que** l'arrangement des conduites comprend au moins deux conduites indépendantes (25, 26).

3. Dispositif lubrificateur selon la revendication 1 ou 2, **caractérisé en ce qu'**une première conduite (25) débouche sur un trou médian de la buse et au moins une autre conduite (26) débouche sur un passage annulaire entourant le trou médian.

4. Dispositif lubrificateur selon la revendication 3, **caractérisé en ce que** le lubrifiant liquide peut être amené dans la première conduite (25) de la buse.

5. Dispositif lubrificateur selon la revendication 3 ou 4, **caractérisé en ce que**, dans l'autre conduite (26), l'aérosol ou un gaz, en particulier de l'air, peut au choix être amené à la buse.

6. Dispositif lubrificateur selon l'une des revendications 1 à 5, **caractérisé en ce que** la réserve (12) de lubrifiant liquide et la réserve d'aérosol sont contenues dans un récipient commun (11).

7. Dispositif lubrificateur selon l'une des revendications 1 à 6, **caractérisé en ce qu'**une soupape pour régler le débit est disposée respectivement dans les conduites (25, 26) conduisant à la buse.

8. Dispositif lubrificateur selon l'une des revendications 3 à 7, **caractérisé en ce que** le dispositif de commande (24) présente une première soupape de commande pour la première conduite (25), dans laquelle se présente, du côté de l'entrée, le lubrifiant liquide, et une autre soupape de commande pour chaque autre conduite (26), dans laquelle se présente, du côté de l'entrée, l'aérosol et/ou un gaz, en particulier de l'air.

9. Dispositif lubrificateur selon la revendication 6, **caractérisé en ce que** le récipient (11) présente au moins une conduite de raccordement supplémentaire (23) pour éliminer l'aérosol.

10. Dispositif lubrificateur selon la revendication 9, **caractérisé en ce qu'**un dispositif d'aspiration (27) est affecté à la conduite de raccordement supplémentaire (23).

11. Dispositif lubrificateur selon la revendication 10, **caractérisé en ce que** le dispositif d'aspiration (27) est une unité d'accélération fonctionnant avec de l'air.
